# EUROPÄISCHE PATENTSCHRIFT

(11) **EP 3 529 176 B1**
(45) Veröffentlichungstag und Bekanntmachung des Hinweises auf die Patenterteilung: **22.09.2021**
(21) Anmeldenummer: 17788194.3
(22) Anmeldetag: 20.10.2017
(51) Int. Cl.: B65D 88/60, B60P 1/00, B65G 25/06

(54) **WECHSELBEHÄLTER MIT INTEGRIERTEM BE- UND ENTLADESYSTEM, VORRICHTUNG ZUM BELADEN UND/ODER ENTLADEN, VERFAHREN ZUM BELADEN, VERFAHREN ZUM ENTLADEN, VERFAHREN ZUR HERSTELLUNG**
INTERCHANGEABLE CONTAINER HAVING INTEGRATED LOADING AND UNLOADING SYSTEM, DEVICE FOR LOADING AND/OR UNLOADING, METHOD FOR LOADING, METHOD FOR UNLOADING, METHOD FOR PRODUCTION
CAISSES MOBILES DOTÉES D'UN SYSTÈME INTÉGRÉ DE CHARGEMENT ET DE DÉCHARGEMENT, DISPOSITIF DE CHARGEMENT ET/OU DE DÉCHARGEMENT, PROCÉDÉ DE CHARGEMENT, PROCÉDÉ DE DÉCHARGEMENT, PROCÉDÉ DE FABRICATION

(30) Priorität: 21.10.2016 DE 102016012571
(43) Veröffentlichungstag der Anmeldung: 28.08.2019
(73) Patentinhaber: Penners, Christian, 52538 Selfkant (DE)
(72) Erfinder: Penners, Christian, 52538 Selfkant (DE)
(74) Vertreter: Meinken, Claudia
(86) Internationale Anmeldenummer: PCT/EP2017/076901
(87) Internationale Veröffentlichungsnummer: WO 2018/073434

(56) Entgegenhaltungen:
- EP-A2- 1 852 371
- DE-A1- 2 901 687
- DE-A1-102011 001 850
- US-A- 5 000 647

## Beschreibung

Gegenstand der Erfindung ist ein Wechselbehälter 100 mit einem integrierten Be- und Entladesystem, wobei das integrierte Be- und Entladesystem einen Schubboden 107 und eine hydraulische Antriebseinheit 200 umfasst. Gegenstand der Erfindung sind auch Verfahren zur Herstellung eines erfindungsgemäßen Wechselbehälters 100 und ein Verfahren unter Verwendung eines erfindungsgemäßen Wechselbehälters 100 zum Ein- und Ausladen von Gütern in bzw. aus dem Wechselbehälter 100 sowie Systeme, beispielsweise zum automatischen Be- und/oder Entladen, die den erfindungsgemäßen Wechselbehälter 100 umfassen.

Das Prinzip von Schubböden zum Be- und Entladen ist seit langem bekannt, beispielsweise aus US 4,144,963, US 4,143,760, US 4,611,708, DE 3922248, DE 4002360, EP 0629567, DE 29 01 687 A1, DE 10 2011 001850 A1.

Hydraulische Antriebseinheiten für Schubböden sind ebenfalls bekannt, beispielsweise aus DE 2901687 und US 5,222,593. Besondere Ausführungsformen von hydraulischen Antriebseinheiten für Schubböden sind beispielsweise in US 2009/0078540 beschrieben. Träger für Schubböden sind aus US 5,325,957 bekannt.

Ein Schubboden System mit Schubboden und hydraulische Antriebseinheit ist beispielsweise aus US 4,580,678, WO 2012/036545 bekannt. Dabei ist die hydraulische Antriebseinheit vor dem Schubboden angeordnet.

Es gibt eine Vielzahl von besonderen Ausführungsformen von Schubböden, beispielsweise in US 2014/0311873, US 2014/0183004, US2012/0138430, US 2011/0236168, US2010/0025195, US 2010/0025194, US 2010/025193, US 2009/0020396, US 7,461,738, EP 2149514, EP 2017201 beschrieben.

Schubböden zum Be- und Entladen von Räumen sind aus EP 1698574, DE 60302806, EP 1686081, DE60208320 bekannt.

Container, die mit Schubboden ausgestattet sind, sind im Stand der Technik bekannt. Dabei ist die hydraulische Antriebseinheit für den Schubboden immer Bestandteil des Trailers, (Sattel-) Aufliegers oder LKWs. NL 2009484 offenbart beispielsweise einen Trailer mit Schubboden. Ein Schubboden in einem Auflieger, in Verbindung mit einer beweglichen vorderen Wand ist aus US 2014/0294545 und US 5 000 647 A bekannt. Eine lösbare Verbindung zwischen einem Trailer mit Schubboden und einem Dock mit Schubboden ist in US 2007/0261940 und EP 1 852 371 A2 beschrieben.

US 5,234,309, US 5,139,133, US 5,145,309 und US 5,860,508 offenbaren einen Container mit Schubboden für Flüssigkeit-enthaltende Ladung. Cargo-Container Auflieger mit Schubboden sind aus US 5,664,663 bekannt. Lager- und Transportbehälter mit einer Schubeinrichtung zum Ausschieben des Schüttguts aus dem Behälter ist in DE 10 2004 040 731 und DE 10 2004 054 651 beschrieben.

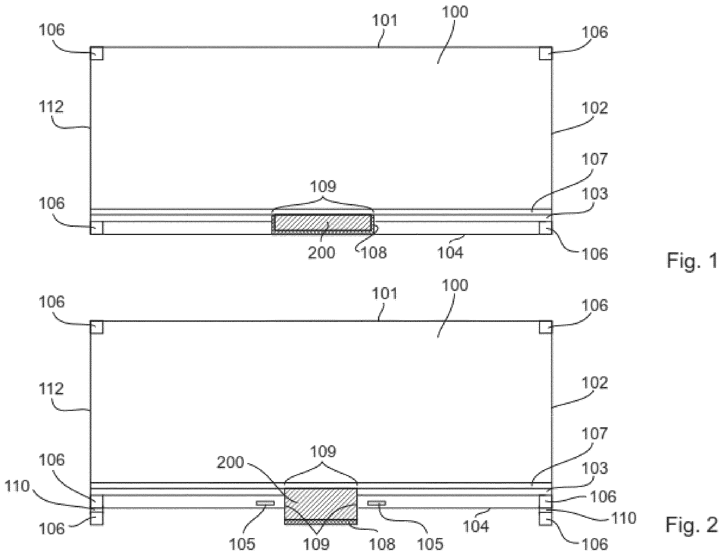

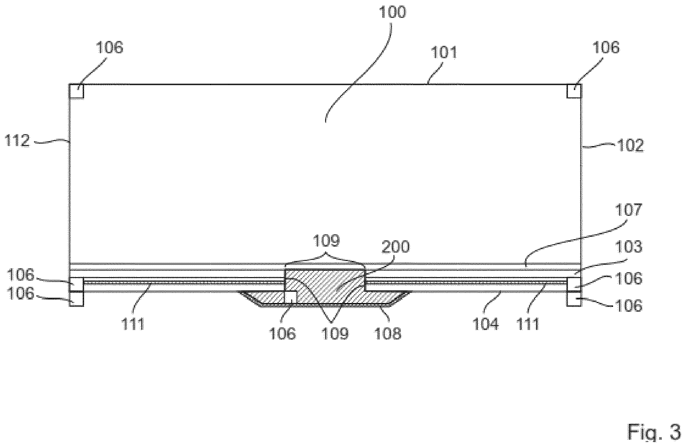

DE 4002360 offenbart einen Container mit in- und hergehenden Förderboden innerhalb der umschließenden Seitenwände und der Wände an den Enden (Fig 2 und 3 und Beschreibung zu Fig. 2 und 3). Kolben und Zylinder der Antriebseinheit sind dabei nicht Bestandteil des Containers, sondern des Sattelaufliegers (Fig. 2).

US 5,000,647 offenbart ebenfalls einen Container mit Schubboden. Auch hier ist die Antriebseinheit aber Bestandteil des Aufliegers (Fig. 1, Fig. 2) und nicht Bestandteil des Containers.

Wechselbehälter wie z.B. Container werden zum Transport von Gütern verschiedenster Art verwendet. Das Be- und Entladen erfolgt heute entweder per Hand, den Einsatz von Hubstaplern oder durch hydraulisch angetriebene Schubböden. Voraussetzung für alle bekannten Be- und Entlademethoden ist deshalb eine abgestimmte logistische Infrastruktur mit mehreren Beteiligten. Ein vom jeweiligen Lieferanten bzw. Abnehmer entkoppeltes Be- und Entladen ist mit den bekannten Verfahren und Vorrichtungen nicht möglich. Beim Einsatz von Schubböden zum Beispiel ist eine Verbindung des Wechselbehälters mit dem Chassis eines LKWs erforderlich, um den Schubboden zu bewegen und dadurch den Wechselbehälter zu Beladen oder zu Entladen; dies ist beispielsweise in DE 4002360 und US 5,000,647 beschrieben. Da der Schubboden im Stand der Technik nur in Verbindung mit dem Chassis des LKW betrieben werden kann, muss der LKW warten, bis derjenige, der die Güter entgegennehmen soll, verfügbar ist oder entsprechende Vorkehrungen getroffen hat und der Wechselbehälter entladen ist. In analoger Weise gilt dies auch für das Beladen. Die Koordination erfordert einen enormen zeitlichen und logistischen Aufwand und erhöht die Kosten für die zu transportierenden Güter. Auch ist eine weitgehende Automatisierung des Be- und Entladevorgangs deshalb bisher nicht möglich.

Eine Aufgabe der vorliegenden Erfindung ist es, Wechselbehälter zur Verfügung zu stellen, die gegenüber den bekannten Wechselbehältern verbessert sind und die für eine weitgehende Automatisierung bzw. Entkopplung des Be- und Entladens von anderen Teilen der Logistik geeignet sind.

Gegenstand der Erfindung ist ein Wechselbehälter 100 gemäß Anspruch 1 mit einem Schubboden 107 auf der Innenseite des Bodens 103 des Wechselbehälters 100 dadurch gekennzeichnet, dass der Wechselbehälter 100 mindestens eine hydraulische Antriebseinheit 200 für den Schubboden 107 umfasst, wobei die hydraulische Antriebseinheit 200 unter dem Schubboden 107 angeordnet ist und Zylinder mit Kolben 203, Kolbenstangen 205, Antriebsträger 201 umfasst. Hydraulische Antriebseinheiten 200 für Schubböden 107 sind bekannt. In bevorzugten Ausführungsformen der Erfindung werden hydraulische Antriebseinheiten 200 mit drei Zylindern 203 verwendet.

Dabei kann die hydraulische Antriebseinheit 200 ganz auf der Außenseite des Wechselbehälters 100 unter dem Boden 103 des Wechselbehälter 100 angeordnet sein. Alternativ kann die hydraulische Antriebseinheit 200 zum Teil auf der Außenseite des Wechselbehälters 100 unter dem Boden 103 des Wechselbehälter 100 angeordnet sein. In einigen Ausführungsformen ist die hydraulische Antriebseinheit 200 ganz im Boden 103 des Wechselbehälter 100 angeordnet. In anderen Ausführungsformen ist die hydraulische Antriebseinheit 200 zum Teil im Boden 103 des Wechselbehälter 100 angeordnet. Die hydraulische Antriebseinheit 200 kann zum Teil im Boden 103 und zum Teil auf der Außenseite des Wechselbehälters 100 unter dem Boden 103 angeordnet sein. Die hydraulische Antriebseinheit 200 kann ganz oder zum Teil auf der Innenseite des Bodens 103 des Wechselbehälters 100 angeordnet sein, beispielsweise zum Teil auf der Innenseite des Bodens 103 und zum Teil im Boden 103 oder zum Teil auf der Innenseite des Bodens 103, zum Teil im Boden 103 und zum Teil unter dem Boden 103 auf der Außenseite des Wechselbehälters 100.

Die Anordnung der hydraulischen Antriebseinheit 200 im Einzelfall hängt dabei unter anderem von den Abmessungen der verwendeten hydraulischen Antriebseinheit 200 bzw. von den Abmessungen der Zylinder 203 ab. Je nach zu transportierender Last, angestrebter maximaler Geschwindigkeit des Be- bzw. Entladevorgangs werden hydraulische Antriebseinheiten 200 mit entsprechenden Zylindern 203 ausgewählt, beispielsweise 30-35 cm Zylinder, 40 cm Zylinder, 60 cm Zylinder, 80 cm Zylinder oder größere oder kleiner Zylinder bzw. hydraulische Antriebseinheiten 200 mit entsprechenden Zylinderbohrungen, beispielsweise 100 mm, 120 mm, 80 mm, 125 mm Bohrungen beziehungsweise entsprechendem Durchmesser der Kolbenstangen 205, beispielsweise 35 mm, 45 mm, 60 mm Durchmesser. Die Höhe der hydraulischen Antriebseinheit 200 ist im Wesentlichen durch die Größe der Zylinder 203 vorgegeben. Da es in der überwiegenden Mehrzahl der Fälle ein Ziel ist, dass der Wechselbehälter 100, beispielsweise ein Container ein maximales Volumen im Inneren aufweist, wird die hydraulische Antriebseinheit 200 so im Boden 103 bzw. am Boden 103 des Wechselbehälters 100 befestigt, dass der Höhenverlust im Inneren des Wechselbehälters 100 durch die hydraulische Antriebseinheit 200 möglichst gering ist. Insbesondere bei genormten Wechselbehältern 100 wie z.B. ISO-Containern sind die äußeren Abmessungen standardisiert, beispielsweis durch ISO-Norm 668. Der Einbau der hydraulischen Antriebseinheit 200 in den Wechselbehälter 100, beispielsweise Container muss deshalb so erfolgen, dass die Außenmaße nicht oder nur geringfügig geändert werden und gleichzeitig im Inneren des Wechselbehälters 100 ein möglichst geringer Volumenverlust die Folge ist.

Diese Aufgabe wird erfindungsgemäß durch die Anordnung der hydraulischen Antriebseinheit 200 unmittelbar oberhalb des Bodens 103 im Inneren des Wechselbehälters 100 und/oder im Boden 103 des Wechselbehälters und/oder unterhalb des Bodens 103 an der Außenseite des Wechselbehälters 100 gelöst. Diese Aufgabe wird erfindungsgemäß durch die Anordnung der hydraulischen Antriebseinheit 200 unmittelbar oberhalb des Bodens 103 im Inneren des Wechselbehälters 100 gelöst. Diese Aufgabe wird erfindungsgemäß durch die Anordnung der hydraulischen Antriebseinheit 200 unmittelbar oberhalb des Bodens 103 im Inneren des Wechselbehälters 100 und im Boden 103 des Wechselbehälters 100 gelöst. Diese Aufgabe wird erfindungsgemäß durch die Anordnung der hydraulischen Antriebseinheit 200 im Boden 103 des Wechselbehälters gelöst. Diese Aufgabe wird erfindungsgemäß durch die Anordnung der hydraulischen Antriebseinheit 200 im Boden 103 des Wechselbehälters unterhalb des Bodens 103 an der Außenseite des Wechselbehälters 100 gelöst. Diese Aufgabe wird erfindungsgemäß durch die Anordnung der hydraulischen Antriebseinheit 200 unterhalb des Bodens 103 an der Außenseite des Wechselbehälters 100 gelöst. Diese Aufgabe wird erfindungsgemäß durch die Anordnung der hydraulischen Antriebseinheit 200 unmittelbar oberhalb des Bodens 103 im Inneren des Wechselbehälters 100 und im Boden 103 des Wechselbehälters und unterhalb des Bodens 103 an der Außenseite des Wechselbehälters 100 gelöst. Die jeweils bevorzugte genaue Anordnung der Antriebseinheit 200 kann der Fachmann je nach verwendeter Antriebseinheit 200 einfach festlegen. Vorzugsweise ist die hydraulische Antriebseinheit 200 im Boden 103 des Wechselbehälters und unterhalb des Bodens 103 an der Außenseite des Wechselbehälters 100 angeordnet. Eine hydraulische Antriebseinheit 200 mit geringer Höhe kann beispielsweise im Boden 103 des Wechselbehälters 100 angeordnet werden. Eine hydraulische Antriebseinheit 200 mit größeren Zylindern, Zylinderbohrungen, Kolbenstangen kann nicht vollständig im Boden 103 des Wechselbehälters angeordnet sein; Teile der hydraulischen Antriebseinheit 200 sind dann entweder Außen, unmittelbar am Boden 103 des Wechselbehälters 100 und/oder Innen, ebenfalls unmittelbar am Boden 103 des Wechselbehälters 100 angeordnet. In besonderen Ausführungsformen der Erfindung weist die hydraulische Antriebseinheit 200 eine Höhe von etwa 10 cm oder weniger auf, jedoch vorzugsweise maximal 40 cm, vorzugsweise maximal 30 cm, beispielsweise 16 cm, 18 cm, 20 cm, 22 cm, 24 cm, 26 cm oder 28 cm.

In den bevorzugten Ausführungsformen weist der Wechselbehälter 100 deshalb im Boden 103 mindestens eine Öffnung 109 auf, die die Innenseite des Wechselbehälters 100 mit der Außenseite des Wechselbehälters 100 verbindet. Die Öffnung im Boden 109 kann sich im vorderen Teil, im mittleren Teil, im hinteren Teil des Bodens 103 des Wechselbehälters 100 befinden. Die Größe und die Lokalisation der Öffnung im Boden 109 richten sich unter anderem nach den Abmessungen der hydraulischen Antriebseinheit 200, der Anordnung der hydraulischen Antriebseinheit 200 im und/oder am Wechselbehälter 100 sowie den Abmessungen des Wechselbehälters (z.B. 20 Fuß oder 40 Fuß Container), der Geometrie des verwendeten (Sattel-) Aufliegers wie z.B. des LKWs mit Containerchassis. Die Öffnung im Boden 109 dient der möglichst platzsparenden Anordnung der hydraulischen Antriebseinheit 200 im bzw. am Wechselbehälter 100 mit der Maßgabe, dass die hydraulische Antriebseinheit 200 unter dem Schubboden 107 angeordnet und Bestandteil des Wechselbehälters 100 ist.

Die Öffnung im Boden 109 erstreckt sich in bevorzugten Ausführungsformen der Erfindung über die gesamte Breite des Wechselbehälters 100, sie kann aber auch kleiner sein. In bevorzugten Ausführungsformen hat die Öffnung im Boden 109 in Längsrichtung des Wechselbehälters 100 eine Länge von 0,5 m oder weniger oder mehr, beispielsweise 0,6 m, 0,7 m, 0,8 m, 0,9 m, 1 m, 1,1 m, 1,2 m, 1,3 m, 1,4 m, 1,5 m, 1,6 m, 1,7 m, 1,75 m, 1,8 m, 1, 9 m, 2 m oder mehr. Der Wechselbehälter 100 kann auch mehrere Öffnungen im Boden 109 enthalten, beispielsweise mehrere kleinere Öffnungen, durch die eine Verbindung des Schubbodens 107 mit der hydraulischen Antriebseinheit 200 gewährleistet ist. Der Boden 103 kann beispielsweise 2, 3, 4, 5, 10, 15, 20, 25, 30, 50 oder mehr Öffnungen enthalten um eine Verbindung von Schubboden 107 und hydraulische Antriebseinheit 200 zu gewährleisten.

Die hydraulische Antriebseinheit 200 muss mit dem Schubboden 107 funktional verbunden sein, damit die hydraulische Antriebseinheit 200 den Schubboden 107 zum Beladen bzw. Entladen der Güter hin und her bewegen kann. Das funktionale Zusammenwirken von Schubboden 107 und hydraulischer Antriebseinheit 200 ist bekannt. Gegenstand der Erfindung sind auch Verfahren zum Beladen eines erfindungsgemäßen Wechselbehälters 100, beispielsweise ISO Containers. Zum Beladen des erfindungsgemäßen Wechselbehälters 100 wirken der Schubboden 107 und die hydraulische Antriebseinheit 200 derart zusammen, dass die Latten 115 des Schubbodens 107 in Richtung rückseitiger Wand 112 des Wechselbehälters 100 bewegt werden. Die Anzahl der Latten 115 im Schubboden 107 ist in bevorzugten Ausführungsformen ein Vielfaches von drei Latten 115 (Dreier-Gruppe von bewegbaren Latten 115). Die Anzahl der Latten 115 in einem ISO Container beträgt vorzugsweise 21 Latten bzw. 24 Latten, d.h. auf der Innenseite des Bodens 103 des ISO Containers befinden sich 7 bzw. 8 Dreier-Gruppen von Latten 115. Die jeweils ersten Latten 115 aller Dreier-Gruppen von Latten 115 werden zum Beladen gemeinsam nach vorne geschoben, dann die jeweils zweiten Latten 115 aller Dreier-Gruppen von Latten 115 und dann die jeweils dritten Latten 115 aller Dreier-Gruppen von Latten 115. Dann werden alle Latten 115 des Schubbodens 107 wieder in Richtung rückseitiger Wand 112 des Wechselbehälters 100, z.B. ISO Containers bewegt, die jeweils ersten Latten 115 aller Dreier-Gruppe von Latten 115 werden wieder gemeinsam nach vorne geschoben, dann die jeweils zweiten Latten 115 aller Dreier-Gruppen von Latten 115 und dann die jeweils dritten Latten 115 aller Dreier-Gruppen von Latten 115, dann werden alle Latten 115 wieder gemeinsam in Richtung rückseitiger Wand 112 bewegt und so weiter. Die Hin- und Her-Bewegung der Latten 115 des Schubbodens 107 erfolgt durch die hydraulische Antriebseinheit 200, die mit dem Schubboden funktional zusammenwirkt und die Latten 115 hin und her bewegt. Die Hin- und Her-Bewegung der Latten 115 wird solange wiederholt, bis der Wechselbehälter 100 beladen ist, d.h. die Güter von einem Ort bzw. System außerhalb des Wechselbehälters 100 in den Wechselbehälter 100 umgeladen sind. Gegenstand der Erfindung ist ein Verfahren zum Beladen eines erfindungsgemäßen Wechselbehälters 100 wie vorstehend beschrieben, wobei das Beladen beispielsweise in weniger als 15 min, vorzugsweise in weniger als 10 min, besonders bevorzugt in weniger als 5 min erfolgen kann und wobei ein erfindungsgemäßer Wechselbehälter 100 mit integriertem Schubboden 107 und integrierter hydraulischer Antriebseinheit 200 verwendet wird.

Gegenstand der Erfindung sind auch Verfahren zum Beladen gemäß Anspruch 16 sowie Verfahren zum Entladen gemäß Anspruch 17 eines erfindungsgemäßen Wechselbehälters 100, beispielsweise ISO Containers. Zum Entladen wirken der Schubboden 107 und die hydraulische Antriebseinheit 200 derart zusammen, dass die Latten 115 des Schubbodens 107 in Richtung vorderer Wand 102 des Wechselbehälters 100 bewegt werden. Die Anzahl der Latten 115 im Schubboden 107 ist in bevorzugten Ausführungsformen ebenfalls ein Vielfaches von drei Latten 115 (Dreier-Gruppe von bewegbaren Latten 115). Die jeweils ersten Latten 115 aller Dreier-Gruppen von Latten 115 werden zum Entladen gemeinsam nach hinten in Richtung der rückseitigen Wand 112 geschoben, dann die jeweils zweiten Latten 115 aller Dreier-Gruppen von Latten 115 und dann die jeweils dritten Latten 115 aller Dreier-Gruppen von Latten 115. Dann werden alle Latten 115 des Schubbodens 107 wieder in Richtung vorderer Wand 102 des Wechselbehälters, insbesondere ISO Containers bewegt, die jeweils ersten Latten 115 aller Dreier-Gruppe von Latten 115 werden wieder gemeinsam nach hinten geschoben, dann die jeweils zweiten Latten 115 aller Dreier-Gruppen von Latten 115 und dann die jeweils dritten Latten 115 aller Dreier-Gruppen von Latten 115, dann werden alle Latten 115 wieder gemeinsam in Richtung vorderer Wand 102 bewegt und so weiter. Die Hin- und Her-Bewegung der Latten 115 des Schubbodens 107 erfolgt durch die hydraulische Antriebseinheit 200, die mit dem Schubboden funktional zusammenwirkt und die Latten 115 hin und her bewegt. Die Hin- und Her-Bewegung der Latten 115 wird solange wiederholt, bis der Wechselbehälter 100 entladen ist, d.h. die Güter von dem Wechselbehälter 100 an einen Ort bzw. ein System außerhalb des Wechselbehälters 100 umgeladen sind. Gegenstand der Erfindung ist ein Verfahren zum Entladen eines erfindungsgemäßen Wechselbehälters 100 wie vorstehend beschrieben, wobei das Entladen beispielsweise in weniger als 15 min, vorzugsweise in weniger als 10 min, besonders bevorzugt in weniger als 5 min erfolgen kann und wobei ein erfindungsgemäßer Wechselbehälter 100 mit integriertem Schubboden 107 und integrierter hydraulischer Antriebseinheit 200 verwendet wird.

Funktionale Verbindungen zwischen Schubboden 107 und hydraulischer Antriebseinheit 200 sind bekannt. Als funktionale Verbindung zwischen Schubboden 107 und hydraulischer Antriebseinheit 200 sind erfindungsgemäß alle Verbindungen zwischen Schubboden 107 und hydraulischer Antriebseinheit 200 geeignet, bei denen die Latten 115 des Schubbodens 107 mit der hydraulischen Antriebseinheit 200 hin und her bewegt werden können.

Erfindungsgemäß umfasst sind Verfahren zum Beladen, Entladen und zum Transport von Gütern aller Art mit dem erfindungsgemäßen Wechselbehälter 100. Güter sind zum Beispiel loses Schüttgut, Paletten, Kanister, Ballen und Rollen.

In bevorzugten Ausführungsformen umfasst das Antriebssystem 200 im erfindungsgemäßen Wechselbehälter 100 eine Steuerung an der Außenseite des Wechselbehälters 100. Weiterhin umfasst der erfindungsgemäße Wechselbehälter 100 vorzugsweise auch die Elektrik für die Steuerung des Beladens und Entladens.

In bevorzugten Ausführungsformen weist die vordere Wand 102 des Wechselbehälters 100 eine Vorrichtung zum Öffnen des Wechselbehälters 100 auf, durch die die Güter ein- bzw. ausgeladen werden können wie beispielsweise Türen.

Mit den nachstehenden erfindungsgemäßen Vorrichtungen kann das Beladen und das Entladen von Wechselbehältern automatisiert und / oder an digitalisierte Bedarfsanfragen angepasst werden (Smart Device, Smart Factory).

Zum Beladen werden die Güter von einem Ort oder System außerhalb des Wechselbehälters 100 in den Wechselbehälter 100 umgeladen. Zum Entladen werden die Güter vom Wechselbehälter 100 an einen Ort oder in/auf ein System außerhalb des Wechselbehälters 100 umgeladen. Das System kann eine mobile oder stationäre Vorrichtung sein, die mit dem Schubboden 107 und/oder dem Wechselbehälter 100 verbunden werden kann und mit deren Hilfe die Güter automatisch und weitgehend unabhängig von der Koordination der beteiligten Partnerwie Kunden, Abnehmer, Zulieferer umgeladen werden können. Eine solche stationäre oder mobile Vorrichtung kann beispielsweise ebenfalls mit einem Schubboden ausgestattet sein und zum Be- und /oder Entladen mit dem Schubboden 107 im Wechselbehälter 100 zusammenwirken, beispielsweise wie in EP 1 852 371 beschrieben.

Gegenstand der Erfindung ist eine Vorrichtung zum Beladen eines erfindungsgemäßen Wechselbehälters 100, wobei die Vorrichtung einen erfindungsgemäßen Wechselbehälter 100 und mindestens ein mobiles oder stationäres System zur Abgabe bzw. Lagerung der Güter umfasst. Verwendung der vorstehenden erfindungsgemäßen Vorrichtungen zum automatischen, digital gesteuerten Beladen von Wechselbehältern. Verwendung der vorstehenden erfindungsgemäßen Vorrichtung oder eines erfindungsgemäßen Wechselbehälters 100 als Smart Device, wobei der Beladevorgang durch mindestens ein anderes Gerät oder mindestens ein digitales Netzwerk und/oder durch Bedarfsanfragen gesteuert wird (Smart Factory). Gegenstand der Erfindung ist ein Verfahren zum Beladen eines erfindungsgemäßen Wechselbehälters 100, wobei die Güter, die sich auf oder in einem mobilen oder stationären System befinden, mit dem Schubboden 107 durch Steuerung der hydraulischen Antriebseinheit 200 in den Wechselbehälter 100 umgeladen werden, wobei das Umladen durch selbst organisierende Logistiksysteme erfolgen kann. Gegenstand der Erfindung ist ein Verfahren zum Beladen eines Wechselbehälters 100 in weniger als 45 min oder 40 min, vorzugsweise weniger als 35 min oder 30 min, besonders bevorzugt weniger als 25 min oder 20 min, beispielsweise 15 min, vorzugsweise weniger als 10 min, besonders bevorzugt weniger als 5 min, dadurch gekennzeichnet, dass eine vorstehend beschriebene Vorrichtung mit einem erfindungsgemäßen Wechselbehälter 100 mit integriertem Schubboden 107 und integrierter hydraulischer Antriebseinheit 200 verwendet wird. Verfahren zum Beladen eines erfindungsgemäßen Wechselbehälters 100, insbesondere eines 40 Fuss Containers (z.B. 40 Fuss ISO Container) dadurch gekennzeichnet, dass die Güter in 15 bis 30 min, vorzugsweise 20 bis 25 min von einem System bzw. Ort außerhalb des Wechselbehälters 100 umgeladen werden in den Wechselbehälter 100. Verfahren zum Beladen eines erfindungsgemäßen Wechselbehälters 100, insbesondere eines 20 Fuss Containers (z.B. 20 Fuss ISO Container) dadurch gekennzeichnet, dass die Güter in 5 bis 20 min, vorzugsweise 15 bzw. 10 min von einem System bzw. Ort außerhalb des Wechselbehälters 100 in den Wechselbehälter 100 umgeladen werden.

Gegenstand der Erfindung ist eine Vorrichtung zum Entladen eines erfindungsgemäßen Wechselbehälters 100, wobei die Vorrichtung einen erfindungsgemäßen Wechselbehälter 100 und mindestens ein mobiles oder stationäres System zur Aufnahme bzw. Lagerung der Güter umfasst. Verwendung der vorstehenden erfindungsgemäßen Vorrichtungen zum automatischen, digital gesteuerten Entladen von Wechselbehältern. Verwendung der vorstehenden erfindungsgemäßen Vorrichtung oder eines erfindungsgemäßen Wechselbehälters 100 als Smart Device, wobei der Entladevorgang durch mindestens ein anderes Gerät oder mindestens ein digitales Netzwerk und/oder durch Bedarfsanfragen gesteuert wird (Smart Factory). Gegenstand der Erfindung ist ein Verfahren zum Entladen eines erfindungsgemäßen Wechselbehälters 100, wobei die Güter, die sich in dem Wechselbehälter 100 befinden, mit dem Schubboden 107 durch Steuerung der hydraulischen Antriebseinheit 200 auf oder in ein mobiles oder stationäres System umgeladen werden, wobei das Umladen durch selbst organisierende Logistiksysteme erfolgen kann. Gegenstand der Erfindung ist ein Verfahren zum Entladen eines Wechselbehälters 100 in weniger als 45 min oder 40 min, vorzugsweise weniger als 35 min oder 30 min, besonders bevorzugt weniger als 25 min oder 20 min, beispielsweise 15 min, vorzugsweise weniger als 10 min, besonders bevorzugt weniger als 5 min, dadurch gekennzeichnet, dass eine vorstehend beschriebene Vorrichtung mit einem erfindungsgemäßen Wechselbehälter 100 mit integriertem Schubboden 107 und integrierter hydraulischer Antriebseinheit 200 verwendet wird. Verfahren zum Entladen eines erfindungsgemäßen Wechselbehälters 100, insbesondere eines 40 Fuss Containers (z.B. 40 Fuss ISO Container) dadurch gekennzeichnet, dass die Güter von dem Wechselbehälter 100 in 15 bis 30 min, vorzugsweise 20 bis 25 min auf bzw. in ein System bzw. an einen Ort außerhalb des Wechselbehälters 100 umgeladen werden. Verfahren zum Entladen eines erfindungsgemäßen Wechselbehälters 100, insbesondere eines 20 Fuss Containers (z.B. 20 Fuss ISO Container) dadurch gekennzeichnet, dass die Güter von dem Wechselbehälter 100 in 5 bis 20 min, vorzugsweise 15 bzw. 10 min auf bzw. in ein System bzw. an einen Ort außerhalb des Wechselbehälters 100 umgeladen werden.

In bevorzugten Ausführungsformen umfasst der erfindungsgemäße Wechselbehälter 100 mindestens vier genormte Eckbeschläge, beispielsweise Containerecken oder Twistlocks 106, die unter dem Boden 103 an den vier Ecken des Wechselbehälters 100 angeordnet und befestigt sind. Durch die genormten Eckbeschläge, beispielsweise Containerecken oder Twistlocks 106, wird der Boden 103 des Wechselbehälters 100 angehoben und es wird eine Aussparung zwischen den mindestens vier genormten Eckbeschlägen unter dem Boden 103 des Wechselbehälters 100 erzeugt. In dieser Aussparung unter dem Boden 103 des Wechselbehälters 100 kann die hydraulische Antriebseinheit 200 oder können Teile der hydraulischen Antriebseinheit 200 angeordnet und befestigt werden, ohne dass das Gewicht des Wechselbehälters 100 und der darin befindlichen Güter auf der hydraulischen Antriebseinheit 200 lastet. Gleichzeitig kann der erfindungsgemäße Wechselbehälter 100 durch die genormten Eckbeschläge an den vier Ecken unter dem Boden 103, insbesondere Containerecken oder Twistlocks 106, mit anderen Wechselbehältern oder einem Transportmittel wie LKW, Bahn auf den fest an dem Transportmittel befindlichen Verriegelungen oder den genormten Eckbeschlägen der anderen Wechselbehälter aufgesetzt und verriegelt werden, so dass eine formschlüssige Verrieglung gegeben ist.

Darüber hinaus können weitere genormte Eckbeschläge beispielsweise an den Längsseiten des Wechselbehälters 100 angeordnet sein, um den erfindungsgemäßen Wechselbehälter 100 zu stabilisieren. Dies bietet sich beispielsweise bei 40 Fuß Containern oder Kühlcontainern an, die beispielsweise jeweils einen oder mehrere genormten Eckbeschläge an jeder Längsseite umfassen können.

Durch die zusätzlichen, außen am Boden 103 des Wechselbehälters 100 befindlichen genormten Eckbeschläge wird das sensible hydraulische Antriebssystem 200 geschützt und eine optimale Gewichts- und Kraftverteilung im Wechselbehälter 100 erreicht. Als genormte Eckbeschläge sind ISO-Gussecken, Eckbeschläge, Containerecken und Twistlocks 106 geeignet, beispielsweise nach ISO 1161 (DIN ISO 1161). Die genormten Eckbeschläge haben beispielsweise eine Länge von 178 ± 1 mm, eine Breite von 162 ± 1 mm, eine Höhe von 118 ± 1 mm. Die genormten Eckbeschläge haben ein Gewicht von ca. 11 kg je Ecke. Für Seecontainer sind die genormten Eckbeschläge vorzugsweise nach ISO 1496/1 genormt. Vorzugsweise haben die genormten Eckbeschläge eine Höhe von maximal 300 mm, beispielsweise maximal 250 mm, besonders bevorzugt maximal 200 mm, beispielsweise 180 mm oder weniger.

In einer bevorzugten ausführungsform der Erfindung befindet sich unter dem Boden 103 des Wechselbehälters 100 mindestens 4, vorzugsweise mindestens 6 genormte Eckbeschläge, vorzugsweise Twistlocks oder Containerecken 106. Diese zusätzlichen genormten Eckbeschläge stabilisieren den Wechselbehälter 100 mit integriertem Be- und Entladesystem.

In einer weiteren Ausführungsform der Erfindung befindet sich zwischen jeder der mindestens vier genormten Eckbeschlägen, beispielsweise Containerecken oder Twistlocks 106, und dem Boden 103 des Wechselbehälters 100 jeweils mindestens eine Platte 110. Die Platte 110 hat vorzugsweise eine Höhe von mindestens 10 mm, vorzugsweise 15 mm, besonders bevorzugt 16 bis 20 mm.

Durch die zusätzlichen, außen am Boden 103 des erfindungsgemäßen Wechselbehälters 100 befindlichen genormten Eckebeschläge ist der erfindungsgemäße Wechselbehälter 100 um maximal 300 mm höher, beispielsweise 250 mm, 200 mm, 180 mm, 179 mm, 178 mm, 177 mm, 176 mm, 175 mm, 174 mm, 173 mm, 172 mm oder weniger als ein ansonsten baugleicher Wechselbehälter 100 ohne integrierte hydraulische Antriebseinheit 200. Befinden sich zwischen den außen am Boden 103 des erfindungsgemäßen Wechselbehälters 100 befindlichen genormten Eckbeschlägen und dem Boden 103 des Wechselbehälters 100 jeweils eine Platte 110 von beispielsweise 15 mm, dann ist der erfindungsgemäße Wechselbehälter um 215 mm, 195 mm, 194 mm, 193 mm, 192 mm höher als ein ansonsten baugleicher Wechselbehälter 100 ohne integrierte hydraulische Antriebseinheit 200. Die dadurch bedingte Vergrößerung der Außenhöhe des Wechselbehälters 100 ist so gering, dass der erfindungsgemäße Wechselbehälter 100 für alle Verwendungen geeignet ist. Beispielsweise wird die maximale Höhe für den Transport auf der Straße nicht überschritten. Die maximale Höhe liegt in Deutschland bei 4 m. Ein (Sattel-)Auflieger mit erfindungsgemäßem Wechselbehälter 100 überschreitet diese Höhe nicht. Außerdem bleibt der erfindungsgemäße Wechselbehälter 100 für den Transport auf See/Containerschiffen stapelbar und damit seetauglich. Im Gegensatz dazu sind die im Stand der Technik bekannten Container mit Schubboden, bei denen sich die hydraulische Antriebseinheit (z.B. CF3LP-2 HD von CARGO FLOOR®) seitlich bzw. vor dem Container/Schubboden befindet, nicht stapelbar und damit nicht seetauglich.

Eine kritische Größe ist auch das maximale Gewicht des Wechselbehälters 100. Durch die integrierte hydraulische Antriebseinheit 200 wird das Eigengewicht des Wechselbehälters 100 um beispielsweise 2500 kg erhöht, je nach Gewicht der hydraulischen Antriebseinheit 200. Diese Differenz im Eigengewicht ist Hinblick auf das Eigengewicht eines baugleichen Wechselbehälters 100 ohne integrierte hydraulische Antriebseinheit 200 vernachlässigbar und schränkt die Nutzung des erfindungsgemäßen Wechselbehälters 100 nicht ein.

Für die Integration einer hydraulischen Antriebseinheit 200 in den erfindungsgemäßen Wechselbehälter 100 sind im Prinzip alle hydraulischen Antriebseinheiten 200 geeignet, die mit Schubböden funktional zusammenwirken und die Latten 115 des Schubbodens 107 hin und her bewegen können. Die notwendige Leistung der hydraulischen Antriebseinheit 200 hängt unter anderem vom Gewicht des Schubbodens 107, dem Gewicht der zu transportierenden Güter, der gewünschten Geschwindigkeit des Be- bzw. Entladevorgangs ab. Erfindungsgemäß geeignet sind beispielsweise die hydraulischen Antriebeinheiten 200 aus DE 603 02 806, EP 1 698 574, WO 2012/036545, DE2901687, US 5,222,593, WO 2009/051634, US 4,580,678. Erfindungsgemäß geeignet sind die hydraulischen Antriebseinheiten 200 von CARGO FLOOR®, beispielsweise der CF500-Serie wie CF500 SLC, CF500 SL-2, CF500 SL-2 HD, CF500 SLC-3.6, der CF600-Serie wie CF600 HDC, CF600 HDC-4.7, CF100-Serie wie CF100 SL-2, CF100 SLL, CF100 SLL-3.1, der CF800-Serie wie CF800 HD, CF800 HD-6 cyl. Erfindungsgemäß geeignet sind die hydraulischen Antriebseinheiten von KEITH Manufacturing Co, beispielsweise der R-Serie wie KRFII-4, KRFII-3.5, KRFII-3, der V-Serie wie KVD-3.5, KVD-3, der L-Serie wie LP-3.

Es können auch hydraulische Antriebseinheiten mit mehr als 3 Zylindern verwendet werden, beispielsweise mit 6 oder 9 Zylindern.

In bevorzugten Ausführungsformen der Erfindung wird unter dem Boden 103 des Wechselbehälters 100 ein Tragrahmen angebracht bzw. verschweißt. Der Tragrahmen kann eine Verkleidung 108 umfassen. Der Tragrahmen dient der Befestigung der Antriebseinheit 200 und deren Schutz sowie der Stabilisierung des Wechselbehälters 100.

In bevorzugten Ausführungsformen befindet sich unter dem Boden 103 des erfindungsgemäßen Wechselbehälters 100 eine Verkleidung 108 (Schutzkappe), die vorzugsweise undurchlässig für Feuchtigkeit und Flüssigkeiten ist. Die Verkleidung 108 dient dem Schutz der hydraulischen Antriebseinheit 200 und / oder der Öffnung im Boden 109 des Wechselbehälters 100. Durch die Verkleidung 108 wird Schmutz und Spritzwasser abgehalten. Die Verkleidung 108 kann so stabil ausgelegt sein, dass auch Stöße und Schläge abgedämpft bzw. abgehalten werden. Die Ausmaße der Verkleidung 108 richten sich nach der Anordnung der hydraulischen Antriebseinheit 200 und gegebenenfalls der Öffnung im Boden 109, ebenso das für die Verkleidung 108 verwendete Material. Die Verkleidung 108 kann abnehmbar sein, damit gegebenenfalls die hydraulische Antriebseinheit 200 einfach ausgetauscht bzw. repariert werden kann.

In bevorzugten Ausführungsformen umfasst der Wechselbehälter 100 mindestens eine Verbindung und/oder einen Anschluss zu einer Druckquelle für das Hydraulikfluid und mindestens eine Verbindung und/oder einen Anschluss für die Rückführung des Hydraulikfluids zur Druckquelle. Dabei können sich die Verbindungen/Anschlüsse zu der Druckquelle und für den Rückfluss des Hydraulikfluids zur Druckquelle unabhängig voneinander entweder im Inneren des Wechselbehälters 100 oder unmittelbar unterhalb des Bodens 103 des Wechselbehälters 100 befinden. Der Wechselbehälter 100 kann mehr als eine Verbindung bzw. einen Anschluss zu einer Druckquelle für das Hydraulikfluid und mehr als einen Anschluss bzw. eine Verbindung für den Rückfluss des Hydraulikfluids zur Druckquelle umfassen, beispielsweise jeweils zwei, drei, vier oder mehr. Beispielsweise kann der Wechselbehälter 100 eine Verbindung bzw. einen Anschluss zu einer Druckquelle für das Hydraulikfluid und einen Anschluss bzw. eine Verbindung für den Rückfluss des Hydraulikfluids zur Druckquelle umfassen, die von der hydraulischen Antriebseinheit 200 in Richtung auf die rückseitige Wand 112 verlegt sind und eine Verbindung bzw. einen Anschluss zu einer Druckquelle für das Hydraulikfluid und einen Anschluss bzw. eine Verbindung für den Rückfluss des Hydraulikfluids zur Druckquelle umfassen, die von der Antriebseinheit 200 in Richtung auf die vordere Wand 102 verlegt sind. Eine Verbindung bzw. ein Anschluss zu einer Druckquelle für das Hydraulikfluid und ein Anschluss bzw. eine Verbindung für den Rückfluss des Hydraulikfluids zur Druckquelle, die in Richtung auf die rückseitige Wand 112 des Wechselbehälters 100 verlegt sind, können beispielsweise an eine Druckquelle an einem LKW oder (Sattel-)Aufleger angeschlossen werden. Eine Verbindung bzw. ein Anschluss zu einer Druckquelle für das Hydraulikfluid und ein Anschluss bzw. eine Verbindung für den Rückfluss des Hydraulikfluids zur Druckquelle, die in Richtung auf die vordere Wand 102 des Wechselbehälters verlegt sind, können beispielsweise an eine mobile oder stationäre Druckquelle angeschlossen werden. Durch diesen Aufbau ist der erfindungsgemäße Wechselbehälter 100 maximal flexibel in seinem Einsatz. Druckquellen können stationär bei den entsprechenden Be- und Entladestationen vorgehalten werden oder mobil an jeden Ort transportiert werden.

Erfindungsgemäße Wechselbehälter 100 umfassen vorzugsweise mindestens eine Steuerung für die hydraulische Antriebseinheit 200 und/oder den Schubboden 107.

Erfindungsgemäß zeichnet sich ein "Wechselbehälter" 100 dadurch aus, dass er flexibel zwischen verschiedenen Transportmedien ausgetauscht werden kann. Ein erfindungsgemäßer Wechselbehälter 100 ist vorzugsweise für den kombinierten Verkehr Schiene und/oder Straße und/oder See und/oder Flug geeignet. Der Wechselbehälter 100 kann ausklappbare Stützen umfassen, die ein unabhängiges Abstellen, sowie das ungehinderte Ein- und Ausfahren einer Zugmaschine wie LKW oder (Sattel-) Aufleger ermöglichen. Wechselbehälter 100 sind abnehmbare, an den Unterseiten mit verstärkten Greifzangenleisten ausgestattete (Lastwagen-) Aufbauten, die ein gutes Verhältnis zwischen Nutz- und Eigenlast bieten. Die Außenmaße der Wechselbehälter 100 wurden vom europäischen Normenkomitee CEN im Einklang mit den Bestimmungen zu Außenmaßen des Straßengüterverkehrs festgelegt. Entsprechend ihrem Einsatz im Straßenverkehr betragen die Außenmaße der Wechselbehälter 100 bei Höhe und Breite maximal 300 und 250 cm, beispielsweise der nach DIN 70 013 genormte Aufbau mit Plane, 715 cm Länge, zulässigem Gesamtgewicht von 13.000 kg und genormten Eckbeschlägen. Die Breite beträgt innen beispielsweise 2,44 Meter, was für den Transport von Euro-Paletten von Vorteil ist. Die Außenlänge liegt zwischen 6,25 Metern und 13,60 Metern. Sehr gebräuchlich sind Wechselbehälter 100 der Längen 7,15 Meter und 7,45 Meter mit 17 beziehungsweise 18 Euro-Paletten-Stellplätzen. Wechselbehälter 100 können mit einer Plane ausgerüstet sein, als geschlossener Kofferaufbau, mit Rolltor, mit Flügeltür oder komplett als Sonderaufbau. Beispiele für Wechselbehälter 100 sind Pritsche-Plane-Wechselbrücke, Koffer-Wechselbrücke, Kühlkoffer-Wechselbrücke, Flüssigkeiten-Wechselbehälter, Wechselbehälter der Klasse A, Wechselbehälter der Klasse C, Wechselbehälter 100 mit 7150 mm Länge (17 Stellplätzen für Euro-Paletten), Wechselbehälter mit 7450 mm Länge (18 Stellplätze für Euro-Paletten), Wechselbehälter 100 mit 7820 mm Länge (19 Stellplätze für Euro-Paletten), Wechselbehälter 100 mit einer Länge von 13670 mm (33 Stellplätze für Euro-Paletten). Wechselbehälter 100 werden auch als Wechselpritsche, Wechselaufbau, Wechselbrücke, Wechselkoffer, WAB bezeichnet. Erfindungsgemäß umfasst der Begriff "Wechselbehälter" 100 z.B. eine CTU (Cargo Transport Units) mit mindestens vier Befestigungsbeschlägen für die Aufnahme von Twistlocks 106 bzw. Drehverschlüssen nach ISO-Norm Norm 1161-1983, die nicht dauerhaft an einem Unterboden mit Rädern oder an einem Chassis mit Rädern befestigt ist. Ein erfindungsgemäßer Wechselbehälter 100 kann, muss aber nicht stapelbar sein. Die Abmessungen des Wechselbehälters 100 in der Länge variieren je nach Bedarf, beispielsweise mindestens 6 m, vorzugsweise mindestens 6,5 m, besonders bevorzugt mindestens 7 m.

Erfindungsgemäß umfasst der Begriff "Wechselbehälter" 100 auch Container. Containern sind genormte Transporteinheiten unterschiedlicher Bauart, die von den Abmessungen so aufeinander abgestimmt sind, dass sie als "Transportmodule" miteinander kombiniert werden konnten. Container umfassen Großbehälter bzw. Großraum-Frachtbehälter, die mit Straßen-, Schienen-, Wasser- und (in modifizierter Form) mit Luftfahrzeugen befördert werden können. Der Begriff Container umfasst erfindungsgemäß Transportmittel, die aufgrund ihrer stabilen Beschaffenheit ausreichend robust und deshalb für wiederholte Verwendung geeignet sind. Container sind so gebaut, dass mehrere Behältnisse, Versandstücke, Ladungseinheiten (Unit Loads) oder Umverpackungen auf Straße, Eisenbahn, Binnenschiff und Seeschiff von der Packstelle bis zum endgültigen Bestimmungsort gemeinsam in dem Container transportiert werden, ohne dass jedes einzelne Versandstück, jede einzelne Ladungseinheit (Unit Load) oder jede einzelne Umverpackung getrennt umgeschlagen werden muss. Erfindungsgemäß umfasst sind Großcontainer, Mittelcontainer, Kleincontainer, ASA-container, ISO-Binnencontainer, Luftfrachtcontainer, insbesondere ISO-Container, Überseecontainer.

ISO-Container sind genormte Großraumbehälter (Seefracht-Container, Überseecontainer) aus Stahl, die ein einfaches und schnelles Verladen, Befördern, Lagern und Entladen von Gütern ermöglichen. Die einschlägigen Normen (z. B. Maße, Halterungen, Stapelbarkeit) wurden koordiniert von der Internationalen Seeschifffahrts-Organisation (IMO) beschlossen und sind in der ISO-Norm 668 festgelegt. Die am weitesten verbreiteten ISO-Container haben eine Breite von 2,4384m (8 Fuß) und sind entweder 6,096m (20 Fuß) oder 12,192m (40 Fuß) lang. Daraus ergeben sich die als Beladungs-Maßeinheiten verwendete Abkürzungen "TEU" (Twenty-foot Equivalent Unit) und "FEU" (Forty-foot Equivalent Unit); es wird z. B. zur Benennung der Ladefähigkeit von Containerschiffen, von Umschlagsmengen in Häfen oder von Güterbahnhöfen verwendet. Die Container können wegen ihrer genormten Form mit den verschiedensten Transportmitteln (Seeschiffe, Binnenschiffe, Eisenbahn und Lkw) befördert und schnell umgeschlagen werden. Das Eigengewicht eines Containers ist nicht genormt. Allerdings haben Container ein zulässiges Höchstgewicht. Das Höchstgewicht beträgt in Deutschland 40 t, in den Niederlanden 60 t und in den USA, Kanada und Australien 200 t. Um möglichst viel Ladegut transportieren zu können, wird versucht, das Eigengewicht des Containers möglichst gering zu halten. Um die Stabilität und Funktionalität zu gewährleisten, kann ein bestimmtes Eigengewicht jedoch nicht überschritten werden. Die Eigengewichte von Containern unterschiedlicher Hersteller variieren.

Das zulässige Gesamtgewicht eines Containers beträgt in der Regel 11.000 kg bis 35.000 kg. Das Eigengewicht des Containers ist u.a. vom Containertyp abhängig und liegt in der Regel zwischen etwa 950 kg und 6.000 kg. Das Gewicht des Containers wird durch den erfindungsgemäßen Einbau erhöht, beispielsweise um 1200 bis 1500 kg. Die Auswirkung der Erhöhung des Eigengewichts des Containers durch den Schubboden 107 und die hydraulische Antriebseinheit 200 verringert deshalb die Menge an Gütern (Gewicht der zugeladenen Güter), die in den Container geladen werden können, nur geringfügig.

Erfindungsgemäß umfasst sind beispielsweise Wechselbehälter 100 ausgewählt aus Standard Seecontainern (Dry-Van-Container, Boxcontainer, Double Door Container), insbesondere 3,048m (10 Fuß) Standardcontainer, 6.096m (20 Fuß) Standardcontainer, 9,144m (30 Fuß) Standardcontainer, 12,192m (40 Fuß) Standardcontainer, 13,716m (45 Fuß) Standardcontainer, 15,24m (50 Fuß) Standardcontainer, 18,288m (60 Fuß) Standardcontainer, High Cube Container (Box), insbesondere 3,048m (10 Fuß) High Cube Container, 6,096m (20 Fuß) High Cube Container, 9,144, (30 Fuß) High Cube Container, 12,192m (40 Fuß) High Cube Container, 13,716m (45 Fuß) High Cube Container, 15,24m (50 Fuß) High Cube Container, 18,288m (60 Fuß) High Cube Container, Open-Top-Container, insbesondere 6,096m (20 Fuß) Open-Top-Container, 12,192m (40 Fuß) Open-Top-Container, 13,716m (45 Fuß) Open-Top-Container, 15,24m (50 Fuß) Open Top Container, 18,288m (60 Fuß) Open Top Container, Hardtop Container, insbesondere 6,096m (20 Fuß) Hardtop Container, 12,192m (40 Fuß) Hardtop Container, 13,716m (45 Fuß) Hardtop Container, 15,24m (50 Fuß) Hard Top Container, 18,288m (60 Fuß) Hard Top Container, Flat-Container, Kühlcontainer.

Die Länge und die Breite des erfindungsgemäßen Wechselbehälters 100, insbesondere Containers können durch den Einbau des Schubbodens 107 und der hydraulischen Antriebseinheit 200 verändert werden, idealerweise jedoch nur geringfügig um die Funktionalität nicht einzuschränken. In einer besonders bevorzugten Ausführungsform der Erfindung werden die Länge und die Breite des erfindungsgemäßen Wechselbehälters 100, insbesondere Containers durch den Einbau des Schubbodens 107 und der hydraulischen Antriebseinheit 200 im Vergleich zu einem entsprechenden Wechselbehälter, insbesondere Container ohne integrierte Antriebseinheit 200 und gegebenenfalls auch ohne integrierten Schubboden 107 nicht verändert.

ISO-Container haben eine Außenhöhe (Höhe des Containers von außen gemessen, Strecke zwischen Containerboden und Containerdach) von bis zu 2895 mm, vorzugsweise 2370 mm, 2438 mm, 2590 mm, 2591 mm, 2895 mm. Durch den Einbau des Schubbodens 107 und der hydraulischen Antriebseinheit 200 können die Container um bis zu 200 mm, vorzugsweise um bis zu 150 mm, besonders bevorzugt um bis zu 100 mm in der Außenhöhe höher werden. In einer bevorzugten Ausführungsform bleibt die Außenhöhe des Wechselbehälters 100 durch die integrierte hydraulische Antriebseinheit 200 unverändert (Höhenänderung außen = 0). ISO-Container haben eine Innenhöhe (Höhe des Containers im Inneren gemessen, Strecke zwischen Containerboden und Containerdach) von maximal 2709 mm, vorzugsweise 2227 mm, 2263 mm, 2380 mm, 2412 mm, 2390 mm, 2370 mm, 2405 mm, 2676 mm, 2174 mm, 2230 mm, 2300 mm, 2345 mm, 2240 mm, 2205 mm, 2353 mm, 2373 mm, 2239 mm, 2075 mm, 2121 mm, 2240 mm, 2280 mm, 2260 mm, 2200 mm, 2230 mm, 2020 mm, 2125 mm, 2225 mm, 2210 mm, 2124 mm, 2175 mm. Durch den Einbau des Schubbodens 107 und der hydraulischen Antriebseinheit 200 kann sich die innere Höhe des Wechselbehälters 100, insbesondere Containers um bis zu 200 mm, vorzugsweise um bis zu 150 mm, besonders bevorzugt um 20 bis 40 mm oder mehr, beispielsweise 50 mm oder 55 mm verringern.

In einer Ausführungsform der Erfindung wird der erfindungsgemäße Wechselbehälter 100, insbesondere Container mit erfindungsgemäßen Einbau des Schubbodens 107 und der hydraulischen Antriebseinheit 200 im Vergleich zu dem Wechselbehälter 100, insbesondere Container ohne erfindungsgemäßen Einbau von Schubboden 107 und hydraulischer Antriebseinheit 200 um 150 mm in der Außenhöhe höher und um 40 mm in der Innenhöhe verringert.

In einer bevorzugten Ausführungsform des Wechselbehälters 100 befinden sich die Stützen/Führungen für die Latten 211 und gegebenenfalls Träger für die Stützen/Führungen 207 im Inneren des Wechselbehälter 100, insbesondere Containers. Diese können direkt oder indirekt auf dem Boden 103 im Inneren des Wechselbehälters 100 befestigt sein. Im Stand der Technik sind verschiedene Ausführungsformen für Stützen/Führungen für die Latten 211 des Schubbodens 107 und Träger für die Stützen/Führungen 207 bekannt, die Bestandteil des erfindungsgemäßen Wechselbehälters 100, insbesondere Containers sein können.

In bevorzugten Ausführungsformen schließen die Stützen/Führungen für die Latten 211 und die Antriebsträger 201 mit der Oberkante des Bodens 103 des Wechselbehälters 100 ab. Durch den Schubboden 107 inklusive der Stützen/Führungen für die Latten 211 und gegebenenfalls die Träger für die Stützen/Führungen 207 wird die Höhe im Inneren des Wechselbehälters, insbesondere Containers beispielsweise um 0 mm, 1 mm, 2 mm, 3 mm, 4 mm, 5 mm, 10 mm, 15 mm, 20 mm, 25 mm, 30 mm, 35 mm, 40 mm, 45 mm, 50 mm, 55 mm verringert.

Gegenstand der Erfindung ist ein Verfahren zur Herstellung eines erfindungsgemäßen Wechselbehälters 100 gemäß Anspruch 18 umfassend den Einbau eines Schubbodens 107 mit Latten 115, Stützen/Führungen für die Latten 211 und gegebenenfalls Träger für die Stützen/Führungen 207 in das Innere des Wechselbehälters 100 und den Einbau einer hydraulischen Antriebseinheit 200 unter dem Schubboden 107, wobei für den Wechselbehälter 100 ein Boden 103 mit mindestens einer Öffnung im Boden 109 verwendet wird und gegebenenfalls mindestens eine Verkleidung 108 unter dem Boden 103, unter der Öffnung im Boden 109 und/oder unter der hydraulischen Antriebseinheit 200 befestigt wird.

Gegenstand der Erfindung ist ein Verfahren zum Umbau eines Wechselbehälters zur Herstellung eines erfindungsgemäßen Wechselbehälters 100, wobei in einen Wechselbehälter der gegebenenfalls bereits einen Schubboden 107, aber keine hydraulische Antriebseinheit 200 umfasst, mindestens eine Öffnung im Boden 109 des Wechselbehälters 100 erzeugt wird, gegebenenfalls ein Schubboden 107 eingebaut wird und mindestens eine hydraulische Antriebseinheit 200 unter dem Schubboden 107 angeordnet wird und gegebenenfalls mindestens eine Verkleidung 108 unter dem Boden 103, unter der Öffnung im Boden 109 und/oder unter der hydraulischen Antriebseinheit 200 befestigt wird.

Gegenstand der Erfindung ist ein Verfahren zum Umbau eines Wechselbehälters zur Herstellung eines erfindungsgemäßen Wechselbehälters 100, wobei in einen Wechselbehälter ohne Schubboden 107 und ohne hydraulische Antriebseinheit 200 im Boden 103 des Wechselbehälters 100 mindestens eine Öffnung im Boden 109 erzeugt wird, ein Schubboden 107 im Inneren des Wechselbehälters 100 und mindestens eine hydraulische Antriebseinheit 200 unter dem Schubboden 107 angeordnet wird und gegebenenfalls mindestens eine Verkleidung 108 unter dem Boden 103, unter der Öffnung im Boden 109 und/oder unter der hydraulischen Antriebseinheit 200 befestigt wird.

Die vorstehend beschriebenen Verfahren können die Anordnung und Befestigung von zusätzlichen genormten Eckbeschlägen an den vier Ecken unter dem Boden 103 des Wechselbehälters 100 und gegebenenfalls die Anordnung und Befestigung weiterer genormter Eckbeschläge an den Längsseiten unter dem Boden des Wechselbehälters 100 umfassen.

Die erfindungsgemäßen Wechselbehälter 100 sind gegenüber dem Stand der Technik verbessert, da sie das vom Chassis unabhängige Be- und Entladen des Wechselbehälters 100 ermöglichen. Das Be- und entladen kann innerhalb weniger Minuten erfolgen. Dadurch können die Standzeiten verringert werden; eine Automatisierung des Be- und Entladevorgangs beispielsweise durch mobile oder stationäre Hydraulikanlagen beim Kunden ist möglich. Die Funktionalität eines Wechselbehälters bleibt durch die Integration von Schubboden 107 und damit funktional zusammenwirkender hydraulischer Antriebseinheit 200 in dem erfindungsgemäßen Wechselbehälter 100 vollständig erhalten. Die Außenhöhe des Wechselbehälters 100 ist z.B. durch die Normen der Straßenverkehrsordnung in Deutschland und vergleichbarer Vorgaben in anderen Ländern, die Brückenhöhe in den einzelnen Ländern etc. begrenzt. Durch den Einbau des Schubbodens 107 und des hydraulischen Antriebssystems 200 in den Wechselbehälter 200 (erfindungsgemäßer Wechselbehälter 100 auch bezeichnet als "Wechselbehälter 100 mit integriertem Be- und Entladesystem") wird die maximale Höhe des Wechselbehälters 100 nur minimal verändert und bleibt z.B. auch beim Transport auf einem Sattelauflieger unter der zulässigen Gesamthöhe von 4 m, die in Deutschland erlaubt ist. Wichtig ist auch, dass das zulässige Höchstgewicht aus Nutzlast (Gewicht der Güter) in Verbindung mit dem Eigengewicht des Wechselbehälters 100, dass das Gewicht des Schubbodens 107 und der hydraulischen Antriebseinheit 200 umfasst, nicht überschritten wird. Der erfindungsgemäße Wechselbehälter 100 weist gegenüber einem ansonsten baugleichen Wechselbehälter 100 ohne Schubboden 107 und hydraulischen Antriebseinheit 200 nur ein geringfügig erhöhtes Eigengewicht auf, je nach hydraulischer Antriebseinheit 200 von z.B. 900 kg bis 1700 kg. Das innere Volumen bzw. die Innenhöhe werden im Vergleich zu einem Wechselbehälter ohne Schubboden 107 und hydraulischer Antriebseinheit 200 nur geringfügig verringert. Da die innere Höhe nur minimal reduziert ist, kann im Vergleich zu Wechselbehältern ohne hydraulische Antriebseinheit 200 ein fast gleich großes Volumen an Gütern transportiert werden. Weiterhin ist die Stabilität des Wechselbehälters 100 entscheidend. Der erfindungsgemäße Wechselbehälter 100 weist gegenüber einem ansonsten baugleichen Wechselbehälter 100 ohne Hydraulische Antriebseinheit 200 die gleiche bzw. sogar eine höhere Stabilität auf, wenn zusätzliche Twistlocks / Containerecken 106 unter dem Boden 103 des Wechselbehälters 100 angebracht werden. Durch die zusätzlichen Twistlocks / Containerecken 106 ist der erfindungsgemäße Wechselbehälter 100 sehr stabil und weiterhin stapelbar. Die Verkleidung 108 unter dem Boden 103 und der hydraulischen Antriebseinheit 200 stabilisiert den Wechselbehälter 100 zusätzlich.

In einer bevorzugten Ausführungsform der Erfindung ist der Wechselbehälter 100 ein Standard (Box) oder High Cube (Box) oder Open Top Container, beispielsweise ein 20 Fuss oder ein 40 Fuss Container mit einem Schubboden 107, einer Öffnung im Boden 109, mit je einem zusätzlichen genormten Eckbeschlag, vorzugsweise Containerecke an jeder Ecke unter dem Boden 103 des Containers und einer hydraulischen Antriebseinheit 200, die in der Öffnung im Boden 109 und gegebenenfalls unter dem Boden 103 angeordnet ist und die vorzugsweise bündig mit dem Boden 103 im Inneren des Containers abschließt und wobei die hydraulische Antriebseinheit 200 gegebenenfalls durch eine Verkleidung 108, die unterhalb der hydraulischen Antriebseinheit 200 angebracht ist bzw. diese ummantelt, geschützt ist und wobei mindestens eine Leitung zu einer Druckquelle und eine Leitung für den Rückfluss zu der Druckquelle am Boden 103 des Containers entweder auf der Außen- oder der Innenseite angeordnet ist.

In einer bevorzugten Ausführungsform der Erfindung ist der Wechselbehälter 100 ein Standard (Box) oder High Cube (Box) oder Open Top Container, beispielsweise ein 20 Fuss oder ein 40 Fuss Container mit einem Schubboden 107, einer Öffnung im Boden 109, mit je einem zusätzlichen genormten Eckbeschlag, z.B. Containerecke 106 an jeder Ecke unter dem Boden 103 des Containers, jeweils einer Platte 110 zwischen der Außenseite des Bodens 103 und jedem genormten Eckbeschlag/Containerecke 106 und einer hydraulischen Antriebseinheit 200, die in der Öffnung im Boden 109 und gegebenenfalls unter dem Boden 103 angeordnet ist und die vorzugsweise bündig mit dem Boden 103 im Inneren des Containers abschließt und wobei die hydraulische Antriebseinheit 200 gegebenenfalls durch eine Verkleidung 108, die unterhalb der hydraulischen Antriebseinheit 200 angebracht ist bzw. diese ummantelt, geschützt ist und wobei mindestens eine Leitung zu einer Druckquelle und eine Leitung für den Rückfluss zu der Druckquelle am Boden 103 des Containers entweder auf der Außen- oder der Innenseite angeordnet ist.

In einer bevorzugten Ausführungsform der Erfindung ist der Wechselbehälter 100 ein Standard (Box) oder High Cube (Box) oder Open Top Container, beispielsweise ein 20 Fuss oder ein 40 Fuss Container mit einem Schubboden 107, einer Öffnung im Boden 109, mit je einm zusätzlichen genormten Eckbeschlag/Containerecke an jeder Ecke unter dem Boden 103 des Containers und jeweils mindestens einem zusätzlichen genormten Eckbeschlag/Containerecke 106 an jeder Längsseite außen am Boden 103 des Containers und einer hydraulischen Antriebseinheit 200, die in der Öffnung im Boden 109 und gegebenenfalls unter dem Boden 103 angeordnet ist und die vorzugsweise bündig mit dem Boden 103 im Inneren des Containers abschließt und wobei die hydraulische Antriebseinheit 200 gegebenenfalls durch eine Verkleidung 108, die unterhalb der hydraulischen Antriebseinheit 200 angebracht ist bzw. diese ummantelt, geschützt ist und wobei mindestens eine Leitung zu einer Druckquelle und eine Leitung für den Rückfluss zu der Druckquelle am Boden 103 des Containers entweder auf der Außen- oder der Innenseite angeordnet ist.

In einer bevorzugten Ausführungsform der Erfindung ist der Wechselbehälter ein Standard (Box) oder High Cube (Box) oder Open Top Container, beispielsweise ein 20 Fuss oder ein 40 Fuss Container mit einem Schubboden 107, einer Öffnung im Boden 109, mit je einem zusätzlichen genormten Eckbeschlag/Containerecke 106 an jeder Ecke unter dem Boden 103 des Containers, jeweils mindestens einem zusätzlichen genormten Eckbeschlag/Containerecke 106 an jeder Längsseite außen am Boden 103 des Containers und jeweils einer Platte 110 zwischen der Außenseite des Bodens 103 und jedem zusätzlichen genormten Eckbeschlag/Containerecke 106 und einer hydraulischen Antriebseinheit 200, die in der Öffnung im Boden 109 und gegebenenfalls unter dem Boden 103 angeordnet ist und die vorzugsweise bündig mit dem Boden 103 im Inneren des Containers abschließt und wobei die hydraulische Antriebseinheit 200 gegebenenfalls durch eine Verkleidung 108, die unterhalb der hydraulischen Antriebseinheit 200 angebracht ist bzw. diese ummantelt, geschützt ist und wobei mindestens eine Leitung zu einer Druckquelle und eine Leitung für den Rückfluss zu der Druckquelle am Boden 103 des Containers entweder auf der Außen- oder der Innenseite angeordnet ist.

In einer bevorzugten Ausführungsform der Erfindung ist der Wechselbehälter 100 ein Standard (Box) oder High Cube (Box) oder Open Top Container, beispielsweise ein 20 Fuss oder ein 40 Fuss Container mit einem Schubboden 107, einer Öffnung im Boden 109, mit je einem zusätzlichen genormten Eckbeschlag/Containerecke an jeder Ecke unter dem Boden 103 des Containers und einer hydraulischen Antriebseinheit 200, die in der Öffnung im Boden 109 und gegebenenfalls unter dem Boden 103 angeordnet ist und die vorzugsweise bündig mit dem Boden 103 im Inneren des Containers abschließt und wobei die hydraulische Antriebseinheit 200 gegebenenfalls durch eine Verkleidung 108, die unterhalb der hydraulischen Antriebseinheit 200 angebracht ist bzw. diese ummantelt, geschützt ist und wobei mindestens eine Leitung zu einer Druckquelle und eine Leitung für den Rückfluss zu der Druckquelle am Boden 103 des Containers entweder auf der Außen- oder der Innenseite angeordnet ist und wobei der Container im Vergleich zu dem gleichen Container ohne Schubboden 107 und ohne hydraulische Antriebseinheit 200 eine um 0 bis 150 mm höhere Außenhöhe und eine um 40 mm bis 150 mm verringerte Innenhöhe hat.

In einer bevorzugten Ausführungsform der Erfindung ist der Wechselbehälter 100 ein Standard (Box) oder High Cube (Box) oder Open Top Container, beispielsweise ein 20' Fuss oder ein 40' Fuss Container mit einem Schubboden 107, einer Öffnung im Boden 109, mit je einer zusätzlichen Containerecke 106 an jeder Ecke unter dem Boden 103 des Containers, jeweils einer Platte 110 zwischen der Außenseite des Bodens 103 und jeder zusätzlichen Containerecke 106 und einer hydraulischen Antriebseinheit 200, die in der Öffnung im Boden 109 und gegebenenfalls unter dem Boden 103 angeordnet ist und die vorzugsweise bündig mit dem Boden 103 im Inneren des Containers abschließt und wobei die hydraulische Antriebseinheit 200 gegebenenfalls durch eine Verkleidung, die unterhalb der hydraulischen Antriebseinheit 200 angebracht ist bzw. diese ummantelt, geschützt ist und wobei mindestens eine Leitung zu einer Druckquelle und eine Leitung für den Rückfluss zu der Druckquelle am Boden 103 des Containers entweder auf der Außen- oder der Innenseite angeordnet ist und wobei der Container im Vergleich zu dem gleichen Container ohne Schubboden 107 und ohne hydraulische Antriebseinheit 200 eine um 0 bis 150 mm höhere Außenhöhe und eine um 40 mm bis 150 mm verringerte Innenhöhe hat.

In einer bevorzugten Ausführungsform der Erfindung ist der Wechselbehälter 100 ein Standard (Box) oder High Cube (Box) oder Open Top Container, beispielsweise ein 20 Fuss oder ein 40 Fuss Container mit einem Schubboden 107, einer Öffnung im Boden 109, mit je einem zusätzlichen genormten Eckbeschlag/ Containerecke an jeder Ecke unter dem Boden 103 des Containers und jeweils mindestens einem zusätzlichen genormten Eckbeschlag/Containerecke 106 an jeder Längsseite außen am Boden 103 des Containers und einer hydraulischen Antriebseinheit 200, die in der Öffnung im Boden 109 und gegebenenfalls unter dem Boden 103 angeordnet ist und die vorzugsweise bündig mit dem Boden 103 im Inneren des Containers abschließt und wobei die hydraulische Antriebseinheit 200 gegebenenfalls durch eine Verkleidung 108, die unterhalb der hydraulischen Antriebseinheit 200 angebracht ist bzw. diese ummantelt, geschützt ist und wobei mindestens eine Leitung zu einer Druckquelle und eine Leitung für den Rückfluss zu der Druckquelle am Boden 103 des Containers entweder auf der Außen- oder der Innenseite angeordnet ist und wobei der Container im Vergleich zu dem gleichen Container ohne Schubboden 107 und ohne hydraulische Antriebseinheit 200 eine um 0 bis 150 mm höhere Außenhöhe und eine um 40 mm bis 150 mm verringerte Innenhöhe hat.

In einer bevorzugten Ausführungsform der Erfindung ist der Wechselbehälter ein Standard (Box) oder High Cube (Box) oder Open Top Container, beispielsweise ein 20 Fuss oder ein 40 Fuss Container mit einem Schubboden 107, einer Öffnung im Boden 109, mit je einem zusätzlichen genormten Eckbeschlag/Containerecke 106 an jeder Ecke unter dem Boden 103 des Containers, jeweils mindestens einem zusätzlichen genormten Eckbeschlag/Containerecke 106 an jeder Längsseite außen am Boden 103 des Containers und jeweils einer Platte 110 zwischen der Außenseite des Bodens 103 und jedem zusätzlichen genormten Eckbeschlag/Containerecke 106 und einer hydraulischen Antriebseinheit 200, die in der Öffnung im Boden 109 und gegebenenfalls unter dem Boden 103 angeordnet ist und die vorzugsweise bündig mit dem Boden 103 im Inneren des Containers abschließt und wobei die hydraulische Antriebseinheit 200 gegebenenfalls durch eine Verkleidung 108, die unterhalb der hydraulische Antriebseinheit 200 angebracht ist bzw. diese ummantelt, geschützt ist und wobei mindestens eine Leitung zu einer Druckquelle und eine Leitung für den Rückfluss zu der Druckquelle am Boden 103 des Containers entweder auf der Außen- oder der Innenseite angeordnet ist und wobei der Container im Vergleich zu dem gleichen Container ohne Schubboden 107 und ohne hydraulische Antriebseinheit 200 eine um 0 bis 150 mm höhere Außenhöhe und eine um 40 mm bis 150 mm verringerte Innenhöhe hat.

### Beschreibung der Figuren

Die Figuren dienen der beispielhaften Verdeutlichung der Erfindung. Die Erfindung ist nicht auf diese Ausführungsformen beschränkt.
FIG. 1: Figur 1 zeigt die Seitenansicht einer Ausführungsform des erfindungsgemäßen Wechselbehälters 100, insbesondere eines Containers mit Dach 101, vorderer Wand 102, rückseitiger Wand 112, Boden 103, Stahlrahmen 104, Twistlocks/Containerecken 106, hydraulische Antriebseinheit 200, Verkleidung/Schutzklappe 108, Öffnung im Boden 109.
FIG. 2: Figur 2 zeigt die Seitenansicht einer Ausführungsform des erfindungsgemäßen Wechselbehälters 100, insbesondere Containers, mit Schubboden 107, Verkleidung/Schutzkappe 108, Öffnung im Boden 109, Platten 110, hydraulischer Antriebseinheit 200, Dach 101, vorderer Wand 102, rückseitiger Wand 112, Boden 103, Stahlrahmen 104, Taschen für Hubstapler/Gabelstapler 105, Twistlocks/Containerecken 106.
FIG. 3: Figur 3 zeigt die Seitenansicht einer Ausführungsform des erfindungsgemäßen Wechselbehälters 100, insbesondere Containers, mit Schubboden 107, Verkleidung/Schutzkappe 108, Öffnung im Boden 109, hydraulischer Antriebseinheit 200, Dach 101, vorderer Wand 102, rückseitiger Wand 112, Boden 103, Stahlrahmen 104, Taschen für Hubstapler/Gabelstapler 105, Twistlocks/Containerecken 106 und Platten 110.

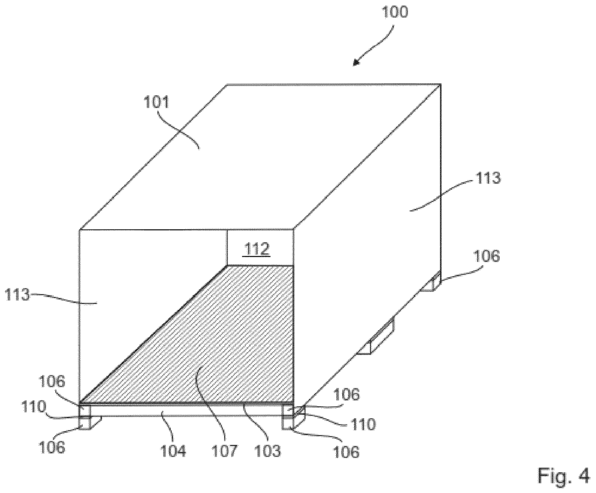

FIG. 4: Figur 4 zeigt einen erfindungsgemäßen Wechselbehälter 100, insbesondere Container mit Schubboden 107, Verkleidung/Schutzklappe 108, Dach 101, Seitenwänden 113, rückseitiger Wand 112, Boden 103, Stahlrahmen 104, Twistlocks/Containerecken 106 in einer Ansicht von schräg Vorne aus der Richtung der vorderen Wand 102, in der sich die Vorrichtung zum Öffnen des Wechselbehälters 100 zum Be- und Entladen von Ladegut befindet.

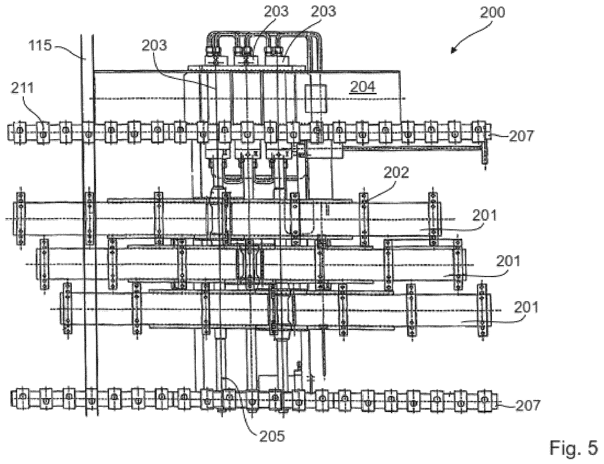

FIG. 5: Figur 5 zeigt eine hydraulische Antriebseinheit 200, die für den Einbau in dem Wechselbehälter 100, insbesondere Container, geeignet ist, von oben aus der Richtung, in der sich die Latten 115 des Schubbodens 107 befinden. Die hydraulische Antriebseinheit 200 umfasst Antriebsträger 201, Befestigungsstützen 202, Zylinder mit Kolben 203, Brückenträger/Befestigungsbalken 204, Kolbenstangen 205, Träger für die Stützen/Führungen 207, Stützen/Führungen für die Latten 211. Beispielhaft ist auch die Anordnung einer Latte 115 auf der hydraulische Antriebseinheit 200 gezeigt.

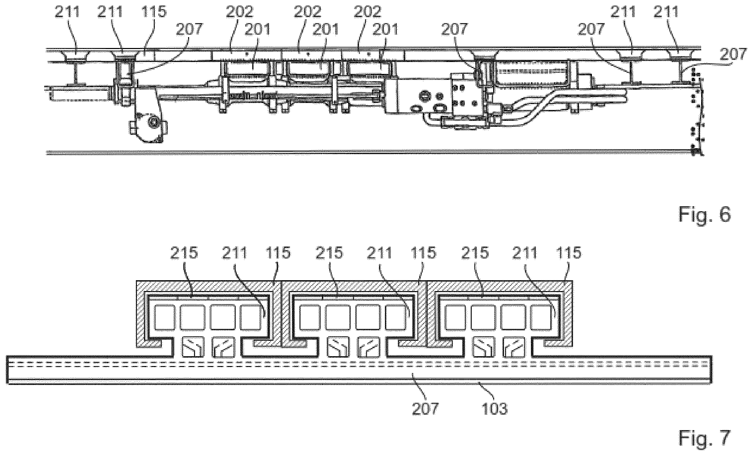

FIG 6.: Figur 6 zeigt eine hydraulische Antriebseinheit 200, die für den Einbau in dem Wechselbehälter 100, insbesondere Container, geeignet ist, in der Seitenansicht, wobei sich in dieser Orientierung der Schubboden 107 mit Latten 115 über der hydraulischen Antriebseinheit 200 befindet und die Verkleidung/Schutzklappe 108 darunter (nicht dargestellt). Die Seitenansicht zeigt die hydraulische Antriebseinheit 200 mit Orientierung der Latte 115 (im Querschnitt), Antriebsträger 201 mit Befestigungsstützen 202, Stützen/Führungen für die Latten 211 auf Trägern für die Stützen/Führungen 207, Querträger 212, wobei der Antriebsträger 200 im Boden 103 und im Stahlrahmen 104 des Wechselbehälters 100, insbesondere Containers angeordnet ist.
FIG. 7: Figur 7 zeigt einen Ausschnitt der funktionalen Verbindung einer hydraulischen Antriebseinheit 200 mit dem Schubboden 107 im Wechselbehälter 100 im Querschnitt. Die Latten 115 des Schubbodens 107 umschließen die Stützen/Führungen für die Latten 211, die sich auf dem Träger für die Stützen/Führungen 207 befinden. Der Träger für die Stützen/Führungen 207 ist auf dem Boden 103 des Wechselbehälters 100 befestigt. Die nicht dargestellten Teile der hydraulischen Antriebseinheit 200 befinden sich in der Öffnung des Bodens 109 und im Stahlrahmen 104 unter dem Boden 103 des Wechselbehälters 100, insbesondere Containers.

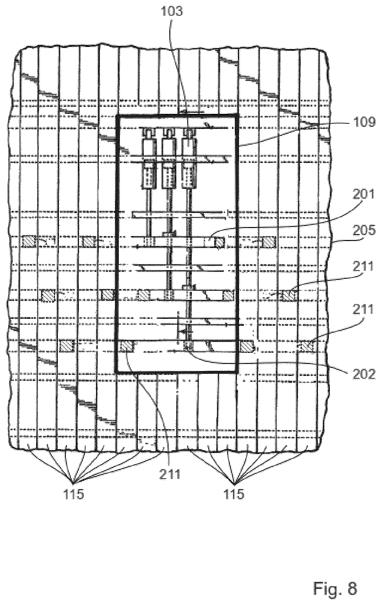

FIG 8: Figur 8 zeigt den Schubboden 107 mit Latten 115 und Öffnung im Boden 109 des Wechselbehälters 100, insbesondere Containers von oben, aus dem Inneren des Wechselbehälters in Richtung Boden 103 (Draufsicht). In der Draufsicht ist die Öffnung im Boden 109 normalerweise durch die Latten 115 des Schubbodens 107 verdeckt. Zur Verdeutlichung der Anordnung der hydraulischen Antriebseinheit 200 im Boden 103 des Wechselbehälters 100 und unter dem Boden 103 Wechselbehälter 100, sind in Figur 8 die Teile der Latten 115, die normalerweise die Öffnung im Boden 109 verdecken, nur bis zur Öffnung im Boden 109 dargestellt. Durch die Öffnung im Boden 109 sind die Zylinder mit Kolben 203, die Kolbenstangen 205, die Antriebsträger 201 und die Befestigungsstützen 202 zu sehen. In der dargestellten Ausführungsform der hydraulischen Antriebseinheit 200 sind die Träger für die Stützen/Führungen 207 zugleich die Antriebsträger 201, auf denen sich die Stützen/Führungen für die Latten 211 befinden.

## Patentansprüche

1. Wechselbehälter (100) mit einem Schubboden (107) auf der Innenseite des Bodens (103) des Wechselbehälters (100), wobei der Schubboden (107) Latten (115) umfasst, die hin und her bewegt werden können, **dadurch gekennzeichnet, dass** der Wechselbehälter (100) mindestens eine hydraulische Antriebseinheit (200) für den Schubboden (107) umfasst, wobei die hydraulische Antriebseinheit (200) unter dem Schubboden (107) angeordnet ist und Zylinder mit Kolben (203), Kolbenstangen (205), Antriebsträger (201) umfasst und wobei die hydraulische Antriebseinheit (200) so mit dem Schubboden (107) verbunden ist, dass die Latten (115) des Schubbodens (107) mit der hydraulischen Antriebseinheit (200) hin und her bewegt werden können.

2. Wechselbehälter (100) nach Anspruch 1 **dadurch gekennzeichnet, dass** der Wechselbehälter mindestens eine Öffnung im Boden (109) aufweist.

3. Wechselbehälter (100) nach Anspruch 1 oder 2 **dadurch gekennzeichnet, dass** die hydraulische Antriebseinheit (200) ganz oder teilweise in der Öffnung im Boden (109) des Wechselbehälters (100) angeordnet ist.

4. Wechselbehälter (100) nach einem der Ansprüche 1 bis 3 **dadurch gekennzeichnet, dass** sich die Antriebsträger (201) ganz oder teilweise im Inneren des Wechselbehälters (100) befinden.

5. Wechselbehälter (100) nach einem der Ansprüche 1 bis 4 **dadurch gekennzeichnet, dass** sich die Antriebsträger (201) ganz oder teilweise in der Öffnung im Boden (109) des Wechselbehälters (100) befinden.

6. Wechselbehälter (100) nach einem der Ansprüche 1 bis 5 **dadurch gekennzeichnet, dass** sich die Antriebsträger (201) ganz oder teilweise unter dem Boden (103) des Wechselbehälters (100) befinden.

7. Wechselbehälter (100) nach einem der Ansprüche 1 bis 6 **dadurch gekennzeichnet, dass** sich die Zylinder mit Kolben (203) und die Kolbenstangen (205) der Antriebseinheit (200) ganz oder teilweise in der Öffnung (109) im Boden (103) des Wechselbehälters (100) befinden.

8. Wechselbehälter (100) nach einem der Ansprüche 1 bis 7 **dadurch gekennzeichnet, dass** sich die Zylinder mit Kolben (203) und die Kolbenstangen (205) der Antriebseinheit (200) ganz oder teilweise unter dem Boden (103) des Wechselbehälters (100) befinden.

9. Wechselbehälter (100) nach einem der Ansprüche 1 bis 8 **dadurch gekennzeichnet, dass** an jeder der vier Ecken an der Unterseite des Bodens (103) jeweils mindestens ein genormter Eckbeschlag, vorzugsweise ein Twistlock (106), angeordnet ist.

10. Wechselbehälter (100) nach Anspruch 9 **dadurch gekennzeichnet, dass** an der Unterseite des Bodens (103) an einer oder beiden Längsseiten des Wechselbehälters (100) mindestens je ein weiterer genormter Eckbeschlag, vorzugsweise Twistlock (106) angeordnet ist.

11. Wechselbehälter (100) nach einem der Ansprüche 9 oder 10 **dadurch gekennzeichnet, dass** sich zwischen der Unterseite des Bodens (103) und den genormten Eckbeschlägen, vorzugsweise Twistlocks (106), an der Außenseite unterhalb des Bodens (103) jeweils eine Platte (110) befindet.

12. Wechselbehälter (100) nach einem der Ansprüche 1 bis 11 **dadurch gekennzeichnet, dass** mindestens der Teil des Bodens (103) an dem die hydraulische Antriebseinheit (200) angeordnet ist, durch eine Verkleidung (108), die sich an der Außenseite des Bodens (103) befindet, geschützt ist.

13. Wechselbehälter (100) nach einem der Ansprüche 1 bis 12 **dadurch gekennzeichnet, dass** der Wechselbehälter (100) mindestens eine Verbindung und/oder einen Anschluss zu einer Druckquelle für das Hydraulikfluid und mindestens eine Verbindung und/oder einen Anschluss für die Rückführung des Hydraulikfluids zur Druckquelle umfasst, wobei sich die Verbindungen/Anschlüsse unabhängig voneinander entweder im Inneren des Wechselbehälters (100) oder unmittelbar unterhalb des Bodens (103) des Wechselbehälters (100) befinden.

14. Wechselbehälter (100) nach einem der Ansprüche 1 bis 13 **dadurch gekennzeichnet, dass** der Wechselbehälter (100) mindestens eine Steuerung für die hydraulische Antriebseinheit (200) und/oder den Schubboden (107) umfasst.

15. Vorrichtung zum Beladen und/oder zum Entladen eines Wechselbehälters (100) umfassend einen Wechselbehälter (100) nach einem der Ansprüche 1 bis 14 und mindestens ein mobiles oder stationäres System zur Lagerung beziehungsweise Abgabe beziehungsweise Aufnahme der Güter.

16. Verfahren zum Beladen eines Wechselbehälters (100) nach einem der Ansprüche 1 bis 14 oder einer Vorrichtung nach Anspruch 15 **dadurch gekennzeichnet, dass** die Güter, die sich auf oder in einem mobilen oder stationären System befinden, durch Steuerung der hydraulischen Antriebseinheit (200), die die Latten (115) des Schubbodens (107) hin und her bewegt, in den Wechselbehälter (100) umgeladen werden.

17. Verfahren zum Entladen eines Wechselbehälters (100) nach einem der Ansprüche 1 bis 14 oder einer Vorrichtung nach Anspruch 15 **dadurch gekennzeichnet, dass** die Güter, die sich in dem Wechselbehälter (100) befinden, durch Steuerung der hydraulischen Antriebseinheit (200), die die Latten (115) Schubbodens (107) hin und her bewegt, auf oder in ein mobiles oder stationäres System umgeladen werden.

18. Verfahren zur Herstellung eines erfindungsgemäßen Wechselbehälters (100) nach einem der Ansprüche 1 bis 14 **dadurch gekennzeichnet, dass** in einen Wechselbehälter (100) ein Schubboden (107) eingebaut wird, in dem Boden (103) des Wechselbehälters (100) eine Öffnung im Boden (109) erzeugt wird oder ein Boden mit Öffnung (109) zur Herstellung des Wechselbehälters (100) verwendet wird und die hydraulische Antriebseinheit (200) im und/oder unter dem Schubboden (107) angeordnet und so mit dem Schubboden (107) verbunden wird, dass die Latten (115) des Schubbodens (107) mit der hydraulischen Antriebseinheit (200) hin und her bewegt werden können.

19. Wechselbehälter (100) nach einem der Ansprüche 1 bis 14, Vorrichtung nach Anspruch 15 oder Verfahren nach einem der Ansprüche 16 bis 18, wobei der Wechselbehälter (100) ein Container ist.

## Claims

1. Interchangeable container (100) with a moving floor (107) on the inside of the bottom (103) of the interchangeable container (100), wherein the moving floor (107) comprises slates (115) that can be moved back and forth, **characterized in that** the interchangeable container (100) comprises at least one hydraulic drive unit (200) for the moving floor (107), wherein the hydraulic drive unit (200) is arranged under the moving floor (107) and comprises cylinder with piston (203), piston rods (205), drive carrier (201) and wherein the hydraulic drive unit (200) is connected to the moving floor (107) so that the slats (115) of the moving floor (107) can be moved back and forth with the hydraulic drive unit (200).

2. Interchangeable container (100) according to claim 1, **characterized in that** the interchangeable container (100) comprises at least one opening in the bottom (109).

3. Interchangeable container (100) according to claim 1 or 2, **characterized in that** the hydraulic drive unit (200) is arranged wholly or partially in the opening in the bottom (109) of the interchangeable container (100).

4. Interchangeable container (100) according to one of claims 1 to 3, **characterized in that** the drive carriers (201) are wholly or partially located in the interior of the interchangeable container (100).

5. Interchangeable container (100) according to one of claims 1 to 4, **characterized in that** the drive carriers (201) are wholly or partially located in the opening in the bottom (109) of the interchangeable container (100).

6. Interchangeable container (100) according to one of claims 1 to 5, **characterized in that** the drive carriers (201) are wholly or partially located under the bottom (103) of the interchangeable container (100).

7. Interchangeable container (100) according to one of claims 1 to 6, **characterized in that** the cylinders with piston (203) and the piston rods (205) of the hydraulic drive unit (200) are wholly or partially located in the opening (109) in the bottom (103) of the interchangeable container (100).

8. Interchangeable container (100) according to one of claims 1 to 7, **characterized in that** the cylinders with pistons (203) and the piston rods (205) of the drive unit (200) are wholly or partially located under the bottom (103) of the interchangeable container (100).

9. Interchangeable container (100) according to one of claims 1 to 8, **characterized in that** at least one standardized corner fitting, preferably a twistlock (106), is arranged at each of the four corners on the underside of the bottom (103).

10. Interchangeable container (100) according to claim 9, **characterized in that** at least one further standardized corner fitting, preferably twistlock (106), is arranged on the underside of the bottom (103) on one or both longitudinal sides of the interchangeable container (100).

11. Interchangeable container (100) according to one of claims 9 or 10, **characterized in that** between the underside of the bottom (103) and the standardized corner fittings, preferably twistlocks (106), on the outside below the bottom (103) in each case one plate (110) is located.

12. Interchangeable container (100) according to one of claims 1 to 11, **characterized in that** at least that part of the bottom (103) on which the hydraulic drive unit (200) is arranged is protected by a cladding (108) which is located on the outside of the bottom (103).

13. Interchangeable container (100) according to one of claims 1 to 12, **characterized in that** the interchangeable container (100) comprises at least one connection and/or one port to a pressure source for the hydraulic fluid and at least one connection and/or one port for the return of the hydraulic fluid to the pressure source, wherein the connections/ports are independent of each other located either inside the interchangeable container (100) or directly below the bottom (103) of the interchangeable container (100).

14. Interchangeable container (100) according to one of claims 1 to 13, **characterized in that** the interchangeable container (100) comprises at least one control for the hydraulic drive unit (200) and/or the moving floor (107).

15. Device for loading and/or unloading an interchangeable container (100) comprising an interchangeable container (100) according to one of claims 1 to 14 and at least one mobile or stationary system for storing respectively delivering respectively receiving the goods.

16. Method for loading an interchangeable container (100) according to one of claims 1 to 14 or a device according to claim 15, **characterized in that** the goods that are located on or in a mobile or stationary system are transferred to the interchangeable container (100) by controlling the hydraulic drive unit (200), which moves the slats (115) of the moving floor (107) back and forth.

17. Method for unloading an interchangeable container (100) according to one of claims 1 to 14 or a device according to claim 15, **characterized in that** the goods that are in the interchangeable container (100) are transferred onto or into a mobile or stationary system by controlling the hydraulic drive unit (200), which moves the slats (115) of the moving floor (107) back and forth.

18. Method for producing an interchangeable container (100) according to one of claims 1 to 14, **characterized in that** a moving floor (107) is installed in an interchangeable container (100), wherein in the bottom (103) of the interchangeable container (100) an opening in the bottom (109) is generated or a bottom with an opening (109) is used to produce the interchangeable container (100), and the hydraulic drive unit (200) is arranged in and / or under the moving floor (107) and is connected to the moving floor (107) in such a way that the slats (115) of the moving floor (107) can be moved back and forth with the hydraulic drive unit (200).

19. Interchangeable container (100) according to one of claims 1 to 14, device according to claim 15 or method according to one of claims 16 to 18, wherein the interchangeable container (100) is a container.

## Revendications

1. Caisses mobiles (100) avec un plancher mobile (107) à l'intérieur du fond (103) de la caisses mobiles (100), dans lequel le plancher mobile (107) comprennent des lattes (115) qui peuvent être déplacé d'avant en arrière, **caractérisé en ce que** la caisses mobiles (100) comprend au moins une unité d'entraînement hydraulique (200) pour le plancher mobile (107), l'unité d'entraînement hydraulique (200) est disposé sous le plancher mobile (107) et comprend cylindre avec piston (203), les tiges de piston (205), un support d'entraînement (201) et dans lequel l'unité d'entraînement hydraulique (200) est reliée au plancher mobile (107) de sorte que les lattes (115) du plancher mobile (107) peuvent être déplacé d'avant en arrière avec l'unité d'entraînement hydraulique (200).

2. Caisses mobiles (100) selon la revendication 1, **caractérisé en ce que** le caisses mobiles (100) comprend au moins une ouverture dans le fond (109).

3. Caisses mobiles (100) selon la revendication 1 ou 2, **caractérisé en ce que** l'unité d'entraînement hydraulique (200) est disposée en tout ou partie dans l'ouverture du fond (109) de la caisses mobiles (100).

4. Caisses mobiles (100) selon l'une des revendications 1 à 3, **caractérisé en ce que** les supports d'entraînement (201) sont situés en tout ou partie à l'intérieur de la caisses mobiles (100).

5. Caisses mobiles (100) selon l'une des revendications 1 à 4, **caractérisé en ce que** le support d'entraînement (201) sont situés en tout ou en partie dans l'ouverture du fond (109) de la caisses mobiles (100).

6. Caisses mobiles (100) selon l'une des revendications 1 à 5, **caractérisé en ce que** les supports d'entraînement (201) sont situés en tout ou en partie sous le fond (103) de la caisses mobiles (100).

7. Caisses mobiles (100) selon l'une des revendications 1 à 6, **caractérisé en ce que** les cylindres à piston (203) et les tiges de piston (205) de l'unité d'entraînement hydraulique (200) sont situés en tout ou en partie dans l'ouverture (109) dans le fond (103) de la caisses mobiles (100).

8. Caisses mobiles (100) selon l'une des revendications 1 à 7, **caractérisé en ce que** les cylindres à pistons (203) et les tiges de piston (205) de l'unité d'entraînement hydraulique (200) sont situés en tout ou en partie sous le fond (103) de la caisses mobiles (100).

9. Caisses mobiles (100) selon l'une des revendications 1 à 8, **caractérisé en ce qu'**au moins un raccord d'angle normalisé, de préférence un verrou tournant (106), est disposé à chacun des quatre coins sur la face inférieure du fond (103).

10. Caisses mobiles (100) selon la revendication 9, **caractérisé en ce qu'**au moins un autre raccord d'angle normalisé, de préférence un verrou tournant (106), est disposé sur la face inférieure du fond (103) sur un ou les deux côtés longitudinaux de la caisses mobiles (100).

11. Caisses mobiles (100) selon l'une des revendications 9 ou 10, **caractérisé en ce qu'**entre la face inférieure du fond (103) et les raccords d'angle normalisés, de préférence des verrous tournants (106), à l'extérieur sous le fond (103) se trouve dans chaque cas une plaque (110) est située.

12. Caisses mobiles (100) selon l'une des revendications 1 à 11, **caractérisé en ce qu'**au moins la partie du fond (103) sur laquelle est disposée l'unité d'entraînement hydraulique (200) est protégée d'un revêtement (108) qui est situé à l'extérieur du fond (103).

13. Caisses mobiles (100) selon l'une des revendications 1 à 12, **caractérisé en ce que** la caisses mobiles (100) comprend au moins un raccord et/ou une connexion à une source de pression pour le fluide hydraulique et au moins un raccord et/ou une connexion pour le retour du fluide hydraulique vers la source de pression, les raccords/connexions sont indépendants les uns des autres à l'intérieur de la caisses mobiles (100) ou directement sous le fond (103) de la caisses mobiles (100).

14. Caisses mobiles (100) selon l'une des revendications 1 à 13, **caractérisé en ce que** la caisses mobiles (100) comprend au moins une commande de l'unité d'entraînement hydraulique (200) et/ou du plancher mobile (107).

15. Dispositif de chargement et/ou de déchargement d'une caisse mobile (100) comprennent une caisses mobiles (100) selon l'une des revendications 1 à 14 et au moins un système mobile ou fixe de stockage respectivement de livraison respectivement de réception de la marchandise.

16. Procédé de chargement d'une caisse mobile (100) selon l'une des revendications 1 à 14 ou dispositif selon la revendication 15, **caractérisé en ce que** les marchandises qui se trouvent sur ou dans un système mobile ou fixe sont transférées dans la caisses mobiles (100) par commander l'unité d'entraînement hydraulique (200) qui déplace les lattes (115) du plancher mobile (107) d'avant en arrière.

17. Procédé de déchargement d'une caisses mobiles (100) selon l'une des revendications 1 à 14 ou dispositif selon la revendication 15, **caractérisé en ce que** les marchandises qui se trouvent dans la caisses mobiles (100), sont déchargées sur ou dans un système mobile ou fixe en commandant l'unité d'entraînement hydraulique (200), qui déplace les lattes (115) du plancher mobile (107) d'avant en arrière.

18. Procédé de fabrication d'une caisses mobiles (100) selon l'invention selon l'une des revendications 1 à 14, **caractérisé en ce qu'**un plancher mobile (107) est installé dans une caisses mobiles (100), dans le fond (103) de la caisses mobiles récipient (100) une ouverture dans le fond (109) est généré ou un fond avec une ouverture (109) est utilisé pour produire la caisse mobile (100) et l'unité d'entraînement hydraulique (200) est disposé dans et/ou sous le plancher mobile (107) et est ainsi reliée au plancher mobile (107), de telle sorte que les lattes (115) du plancher mobile (107) puissent être déplacées d'avant en arrière avec l'unité d'entraînement hydraulique (200).

19. Caisses mobiles (100) selon l'une des revendications 1 à 14, dispositif selon la revendication 15 ou procédé selon l'une des revendications 16 à 18, dans lequel la caisses mobiles (100) est un conteneur.
